# EUROPEAN PATENT APPLICATION

(11) **EP 4 105 857 A1**
(43) Date of publication of application: **21.12.2022**
(21) Application number: 22178124.8
(22) Date of filing: 09.06.2022
(51) Int. Cl.: G06Q 10/00, G06Q 10/06, G06Q 50/10

(54) **METHOD, APPARATUS, AND COMPUTER-READABLE MEDIUM FOR MANAGING WORKFORCES WITH ROTATING SHIFTS**

(30) Priority: 16.06.2021 US 202117349060
(71) Applicant: Talkdesk, Inc., San Francisco, CA 94111 (US)
(72) Inventor: Lawrence, Richard, San Diego, CA 92103 (US); Costa, Erica, 3020-253 Coimbra (PT); Patrao, Jorge, 3800-287 Aveiro (PT); Boyt, Michael, Douglasville, GA 30135 (US)
(74) Representative: Bittner, Peter

(57) **Abstract**

Methods, apparatus, and media for assigning agents for shifts in a call center environment. Shift template data structures are created for an agent for a single week, the shift template data structure having data fields including, an agent work time data field for a plurality of days in a week, an agent weekly minimum hour data field, and an agent weekly maximum hour data field. Worker parameters are combined with the shift template to define shift rotations which can be applied to a scheduling algorithm to assign the agent to a schedule of rotating shifts.

## Description

### FIELD OF THE INVENTION

The invention relates to managing a workforce, such as agents in a call center, when workers are scheduled in rotating shifts by scheduling agents for handing the communications in a manner that achieves desired service levels.

### BACKGROUND

Assigning workers to shifts in a manner that allows the workers to handle tasks in an efficient manner is a critical part of many businesses. For a business such as a contact center (also referred to herein as a "call center"), workers (e.g., agents) are assigned to tasks (e.g., incoming communications) based on skills associated with each agent and the skills required for the tasks. One mechanism for matching the communications with the skills of an agent is to associate the communications with a "queue" that represents a category of the communication, such as Technical Support, or Billing Issues. Agents with the requisite skills can then be assigned to one or more appropriate queues over specific time intervals. In order to achieve desired service levels. Agents with the requisite skills must be assigned to each queue in a manner that is adequate to provide the service level for each queue based on, for example, historical customer needs at various time intervals. Therefore, agent scheduling can be a very complicated process.

Recently, the concept of "rotating shifts" has become popular to provide workers with time flexibility. "Rotating shifts", or "rotating work rules", are a scheduling concept in which agents move through a cycle of working different shifts on different weeks. For example, an agent might work a 4-week rotation with day shifts for 3 weeks, then the night shift for one week, and then the cycle would start again. The rotating work rules can benefit the worker, such as contact center agents by more fairly distributing the different work types. For example, if a worker or group of workers is restricted to the less desirable shifts, their morale and productivity can decrease. This can lead to increased turnover and the associated costs, such as costs for hiring and training new workers. Additionally, because the rotating work rules give workers the ability to work different times on different weeks, each worker can gain experience working in high traffic times as well as lower traffic times where they may have more chances to partake in other work-enriching activities, such as education, coaching, or self-evaluations. Finally, having at least some shifts in specific times, such as weekday regular working hours, may be necessary to allow a worker to attend specific classes or other activities necessary for skill development, certification, and the like.

### SUMMARY

The disclosed implementations provide a mechanism for applying rotating work rules where it is easy to create a cycle of not just shifts, but also other associated rules, such as break rules and worker preference rules. Templates and rules can be defined and assigned to Agents through a user interface for a single week. Rules are applied based on, for example, required breaks, maximum hours, minimum hours and other parameters to automatically create a rotating shift schedule. As described below, Event Types, Shift Templates, and Break Rules are defined and assigned to a worker, such as an agent in a call center. A scheduling engine then applies rotation week definitions to create a schedule for each worker that includes rotating shifts.

A first aspect of the invention is a method for assigning agents for shifts in a call center environment, the method comprising: providing a shift template data structure for an agent for a single week, the shift template data structure having data fields, the data fields including: an agent work time data field for a plurality of days in a week; an agent weekly minimum hour data field; and an agent weekly maximum hour data field; entering data values for each of the data fields for a specified agent to obtain an agent shift data structure; repeating the providing and entering steps for a plurality of weeks; receiving shift rotation data; and processing the agent shift data structures in accordance with the shift rotation data to assign the agent to a schedule of rotating shifts in accordance with a scheduling engine algorithm.

### BRIEF DESCRIPTION OF THE DRAWINGS

FIG. 1 is a schematic diagram of a call center computing architecture in accordance with a disclosed implementation.
FIG. 2 is a schematic diagram of system architecture for incorporating a scheduler into a contact center in accordance with a disclosed implementation.
FIG. 3 is a user interface for defining shift templates in accordance with a disclosed implementation.
FIG. 4 is a user interface for receiving agent data in accordance with a disclosed implementation.
FIG. 5 is a user interface for defining break rules in accordance with a disclosed implementation.
FIG. 6 is a flow chart of a scheduling process in accordance with a disclosed implementation.

### DETAILED DESCRIPTION

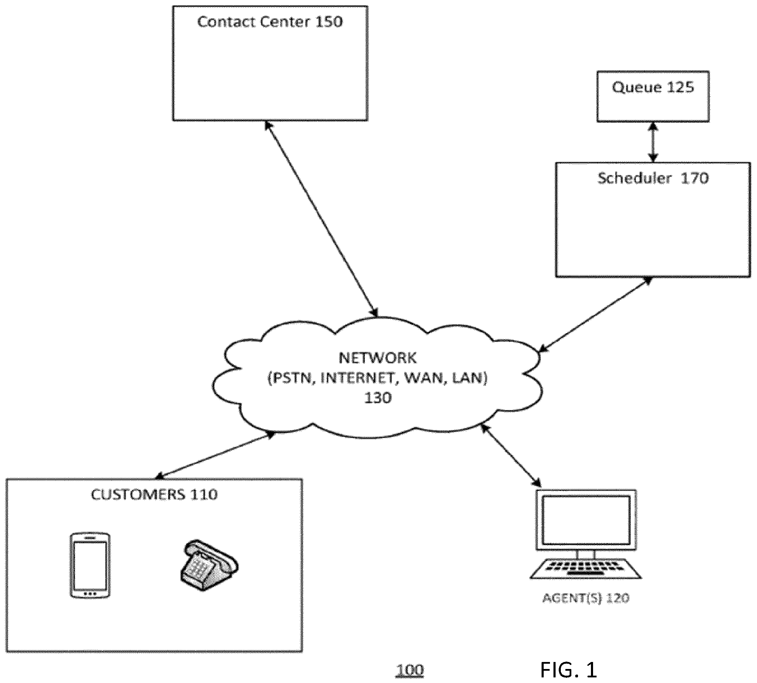

FIG. 1 illustrates components, functional capabilities and optional modules that may be included in a cloud- based contact center infrastructure solution. Customers 110 interact with a contact center 150 using voice, email, text, and web interfaces to communicate with agent(s) 120 through a network 130 and one or more of text or multimedia channels. The agent(s) 120 may be remote from the contact center 150 and may handle communications with customers 110 on behalf of an enterprise. The agent(s) 120 may utilize devices, such as but not limited to, workstations, desktop computers, laptops, telephones, a mobile smartphone and/or a tablet. Similarly, customers 110 may communicate using a plurality of devices, including but not limited to, a telephone, a mobile smartphone, a tablet, a laptop, a desktop computer, or other. For example, telephone communication may traverse networks such as a public switched telephone networks (PSTN), Voice over Internet Protocol (VoIP) telephony (via the Internet), a Wide Area Network (WAN) or a Large Area Network. The network types are provided by way of example and are not intended to limit types of networks used for communications.

In some implementations, agents 120 may be assigned to one or more queues 125, and the agents 120 assigned to a queue 125 may handle communications that are placed in the queue by the contact center 150. Agents 120 and queues 125 may each be associated with one or more skills. The skills may include language proficiency (e.g., English, Spanish, and Chinese), proficiency with certain software applications (e.g., word-processors and spreadsheets), training level (e.g., having taken a particular course or passed a particular test), seniority (e.g., number of years working as an agent 120), achievements (e.g., meeting certain performance or quality goals, receiving positive performance reviews, or receiving positive reviews or ratings from customers 120). Other types of skills may be supported. The skills associated with an agent 120 may be the skills that the agent 120 possesses. The skills associated with a queue 125 may be the minimum set of skills that an agent 120 should possess to handle calls from the queue 125. The skills associated with a queue 125 may be set by a user or administrator.

To facilitate the assignment of agents 120 to queues, the environment 100 may further include a scheduler 170. The scheduler 170 may assign agents 120 to queues 125 based on the skills associated with the agents 120, the skills associated with the queues 125, and what is referred to herein as a "staffing" associated with each queue. The staffing associated with a queue 125 may be the minimum number of agents 120 that are needed to work on a queue 125 to maintain a particular service level. The service level may be defined by one or more metrics such as the maximum amount of time a customer 110 can be expected to wait to speak with an agent 120, for example. Other metrics may also be used.

The scheduler 170 may assign agents 120 to queues 125 for one or more intervals. An interval may be the smallest amount of time that an agent 120 can be scheduled for. Intervals used by the contact center 150 may be fifteen minutes, thirty minutes, forty-five minutes, or any appropriate time interval. The particular agents 120 assigned to a queue 125 for an interval is referred to herein as an "agent assignment." The scheduler 170 may generate the staffing for a queue 125 for an interval based on a predicted workload for the queue 125 during the interval. The predicted workload may be based on historical workload data for the queue 125 and/or contact center 150 or may be provided by a user or administrator. Any method for predicting the workload of a queue 120 may be used.

The scheduler 170 may generate an agent assignment for a queue 125 for each interval based on the staffing generated for the queue 125 for the interval. For example, the call center 150 may use fifteen-minute intervals. The scheduler 170 may generate an agent assignment for the queue 125 for the 8:00am interval based on the staffing for the interval, another agent assignment for the 8:15am interval based on the staffing for the interval, and another assignment for the 8:30am interval based on the staffing for the interval. Further, as described in detail below, the scheduler 170 automatically accommodates rotating shifts.

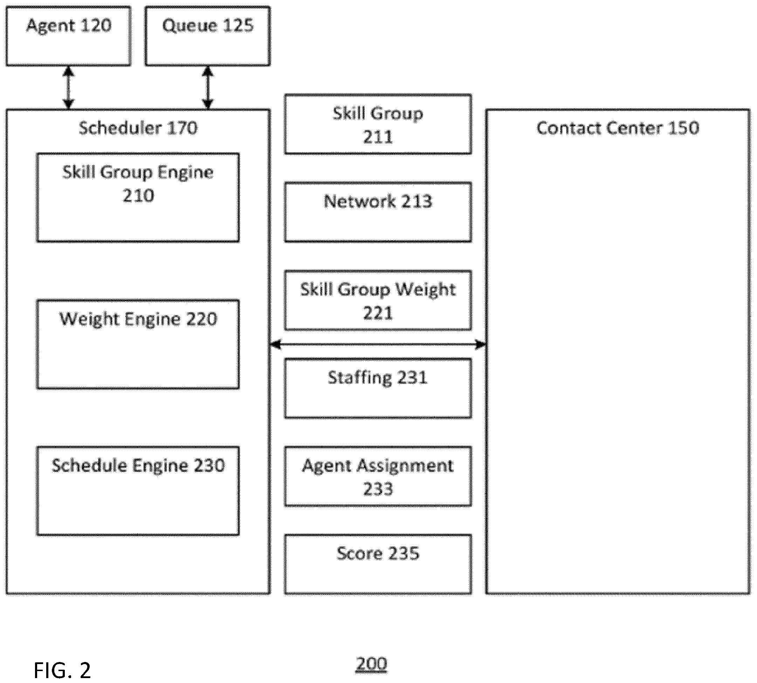

FIG. 2 illustrates a system architecture for incorporating a scheduler 170 into a business or entity such as a contact center 150. As shown the scheduler 170 includes various modules and components such as a skill group engine 210, a weight engine 220, and a schedule engine 230. More or fewer modules or components may be supported by scheduler 170. Each of the skill group engine 210, weight engine 220, and the schedule engine 230 may be implemented together or separately by one or more general purpose computing devices programmed with computer executable code that is stored in one or more non-transient memory devices. Furthermore, while shown as separate from the scheduler 170, in some implementations the scheduler 170 may be implemented as a component of the contact center 150.

The skill group engine 210 may divide or assign the agents 120 into skill groups 211. A skill group 211 may be a grouping of agents 120 based on the skills associated with each agent 120. In some implementations, each agent 120 associated with a skill group 211 may be associated with the same skills. The skills associated with a skill group 211 may be the skills associated with each of the agents 120 in the skill group 211. Each agent 120 may be assigned by the skill group engine 120 into only one skill group 211. Any method for assigning agents 120 into skill groups 211 may be used.

In some implementations, the skill group engine 210 may group agents 120 into skill groups 211 that have similar skills, rather than exactly the same skills. This type of grouping is referred to herein as a fuzzy skill group. For example, an agent 120 that is associated with the skills English and Spanish may be added to a skill group 211 associated with the skills English, Spanish, and Portuguese, even though the agent 120 does not speak Portuguese. Depending on the implementation, the skill group engine 210 may determine to "relax" skills that are not popular or that are not associated with many queues 125 in the contact center 150. Continuing the example above, the skill group engine 120 may have determined that the skill Portuguese is associated with very few queues 125, and/or the queues 125 that are associated with the skill Portuguese are not very busy or have low staffing 121.

After all of the agents 120 have been assigned to a skill group 211, the skill group engine 210 may further divide the skill groups 211 into what are referred to herein as networks 213. A network 213 may be a set of skill groups 211 where each skill group 211 in the network 213 has at least one skill in common with at least one other skill group 211 in the network 213. In addition, no skill group 211 in a first network 213 has any skill in common with any skill group 211 in a second network 213.

In some implementations, the skill group engine 210 may create a network 213 by selecting a skill group 211 for the network 213. The skill group engine 210 may determine the queue 125 that the agents 120 associated with the selected skill group 211 could work. Of the determined queues 125, the skill group engine 210 may determine the skill groups 211 whose agents 120 can work in the determined queues 125. These determined skill groups 211 may be added to the network 213. The skill group engine 210 may then continue adding skill groups 211 in this fashion until no more skill groups 211 can be added to the network 213.

The skill group engine 210 may then select a skill group 211 that has not yet been added to a network 213 and may create a network 213 using the selected skill group 211 as described above. As will be clearer based on the disclosure below, because none of the skill groups 211 in one network have any skills in common with the skill groups 211 in another network, the weight engine 220 may perform simulations and may calculate skill group weights 221 for the skill groups 211 in each network 213 in parallel.

The weight engine 220 may calculate a skill group weight 221 for each skill group 211 in a network 213 for each interval. As used herein, a skill group weight 221 for a skill group 211 may be a data structure that includes a weight for each skill associated with the skill group 211 for an interval. The weight for each skill may be based on how often an agent 120 from the skill group 211 worked on a task or communication that involves the skill during the associated interval. For example, if agent 120 in a skill group 211 spent 90% of their time in an interval working on the skill Spanish and 10% of their time in the interval working on the skill English, the skill group weight 221 for the skill group 211 for the interval would be .90 and .10.

In some implementations, the weight engine 220 may calculate the skill group weight 221 for a skill group 211, by running one or more simulations of the contact center 150. The simulation may be based on historical data for the contact center 150 and may simulate the customers 110, agents 120, and queues 125 associated with the contact center 150 for one or more intervals. Any method for simulating a contact center 150 may be used.

The weight engine 220 may determine from the simulations, how much time each agent 120 of the skill group 211 spent working using each of its skills during an interval. The determined times may be used by the weight engine 220 to determine a distribution of the agent's time across the skills during the interval. The distribution for each skill may be used as the weight for the skill for the interval. For example, If at 8am on Monday the agent 120 spent 30% of his time on the skill English, 60% on the skill Spanish, and was idle 10% of the time (and the agent 120 is the only one in the skill group 211), the weight for the English skill during the interval Monday 8am would be .333 (i.e., 30% / {30% + 60%)) and the weight for the Spanish skill during the interval Monday 8am would be .666 (i.e., 60% / {30% + 60%)). Assuming the values are the same for every interval, the skill group weights 221 for three intervals for the skill group 211 of English and Spanish would be English (0.33, 0.33, 0.33) and Spanish (0.67, 0.67, 0.67).

The schedule engine 230 may use the calculated skill group weights 221 for each queue 125 for each interval to determine which queue 120 to place an agent 120 based on the skills associated with the agent 120. Depending on the implementation, the schedule engine 230 may receive a request to generate an agent assignment 233 for a set of queues 125 for one or more intervals. The agent assignment 233 may be an assignment of one or more agents 120 to the queues 125 of the contact center 150 for the one or more intervals. The general operation of scheduler engine 230 can be similar to the scheduler engine described in U.S. Patent App. Ser. No. 16/668525.

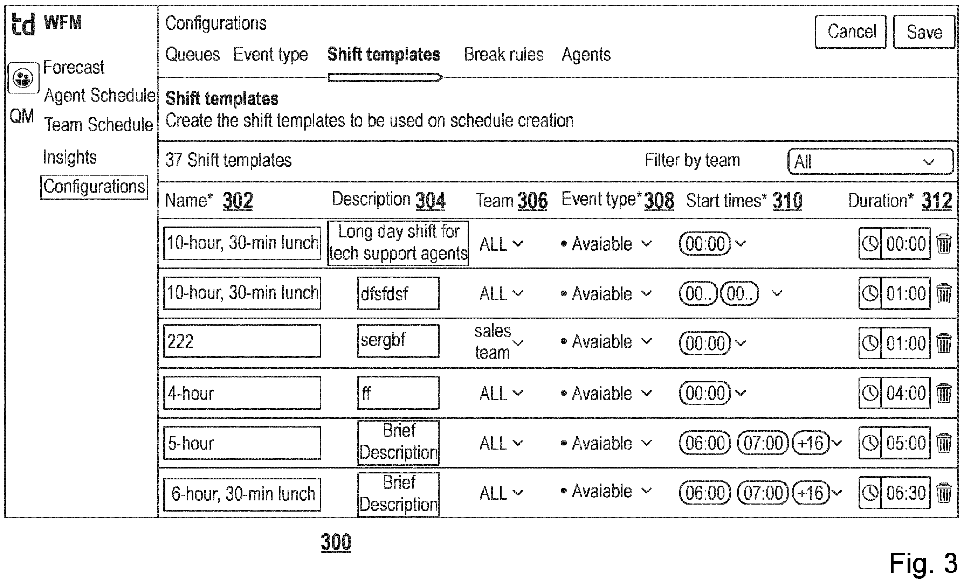

As illustrated in FIG. 2, scheduling engine 230 of the disclosed implementations includes rotating shift module 232. Rotating shift module 232 applies rotating shift templates and work rules which facilitate creation of a cycle of not just shifts, but also other associated rules related to agent scheduling as described below. FIG. 3 illustrates a user interface (Ul) 300 that allows creation of rotating shift template data structures by allowing a user to input parameters into the data structures through text boxes, drop down menus, radio button selectors or other known user interface input elements.

A shift template is a data structure storing, for each day of a week a shift start time, a primary event type, and duration that an agent would work each day. For example, an agent might be assigned a full-time night shift which starts between 7 PM and 9 PM, is primarily composed of the "Available for Interactions" Event Type, and is 8.5 hours in duration. In FIG. 3, each row defines a shift. As illustrated in FIG. 3, Name Column 302 allows a shift name or other indicator) to be entered for a shift. Column 304 allows a description of the shift. For example, the first row of UI 300 indicates a shift named "10-hour, 30-min lunch" with the description "Long day shift for tech support agents." Column 306 is used to enter the team or other group of agents to which the shift applies. In the example of the shift defined in the first row of FIG. 3, all agents can work this shift. In the example of the shift defined in the third row, the shift applies only to members of the "sales team" group. Column 308 allows entry of an event type, such as "Available for Interactions", "Meetings", "Training" or the like. Column 310 allows entry of the start time of day of a shift and column 312 allows entry of the shift time duration.

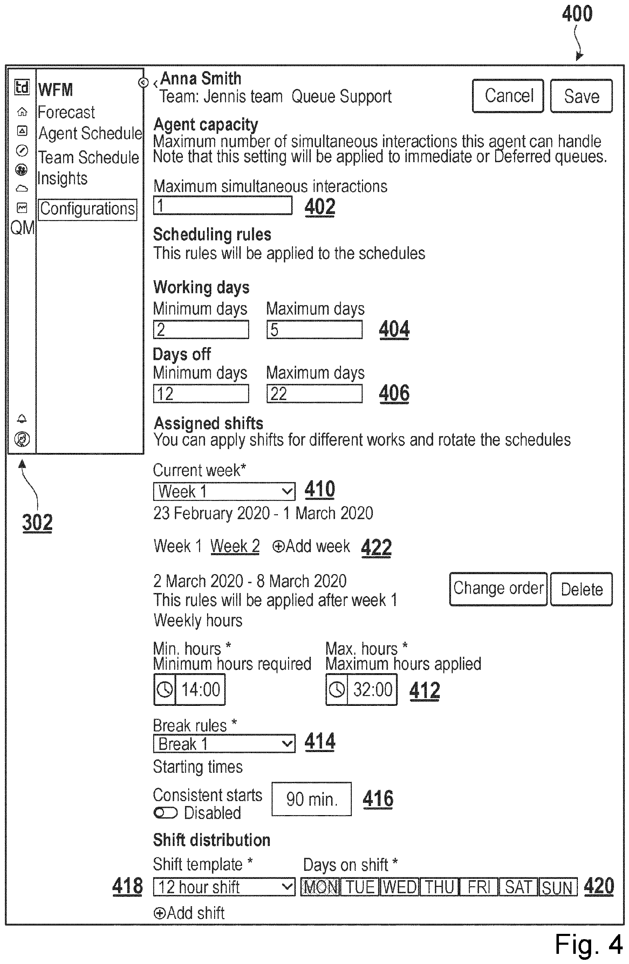

In order to create a flexible rotating shift schedule, rotating shift module must also consider worker parameters applied individually to each worker or a group of workers. FIG 4 illustrates a UI 400 for entering worker parameters into one or more worker parameter data structures which can then be applied to the shift template to create a worker shift data structure. For example, some workers are part time, e.g. only work 20 hours per week, and some workers are full-time. Worker parameters can include: minimum hours/minutes (the minimum duration of paid shift time the agent will be assigned to that week); and Weekly maximum hours (the maximum duration of paid shift time the agent will be assigned to that week). Additionally, it can be specified that the worker will only work particular shifts on certain days of week. For example, the worker may have to pick up a child at school on Monday, Wednesday, and Friday and thus would not be available for daytime shifts on those days of the week.

In the example of FIG. 4, the minimum number of hours per week (or other time period) for the worker is entered at 402. The minimum and maximum number of working days per week (or other time period) for a worker are respectively entered in UI elements at 404. The minimum and maximum number of days off per week (or other time period) for a worker are respectively entered in UI elements at 406. At 410, the current week of the rotation is entered. For example, the rotation of shifts might be for four weeks and the worker parameters being entered could correspond to only the second week of the rotation. Worker parameters can be entered for each week in the rotation.

At 412, the minimum and maximum number of hours per week (or other time period) for a worker are respectively entered in UI elements. At 414, one or more break rules that will apply to the worker are selected. Break rules are described in detail below. At 416 consistent work start times with tolerance can be selected. If this is selected, then all of the agent's shifts will start at the same time during the week and if a tolerance greater than 0 is specified, the maximum difference between any two start times that week will be less than or equal to the specified tolerance (e.g. 90 minutes as shown in FIG. 4). Similarly, a UI element for consistent break start times with tolerance could be provided (but is not shown in FIG. 4). If selected, then all of the agent's breaks of a given Event Type will start at the same start offset from the Shift during the week and, if a tolerance greater than 0 is specified, the maximum difference between any two start offsets that week will be less than or equal to the specified tolerance. At 418, the appropriate shift template (as described above) is selected to be applied to the worker for scheduling by scheduling engine 230 (FIG. 2). The selected shift template is the shift template to which the worker parameters are added to create the agent shift data structure. Note the week boundary is configurable at 420 so some customers might have a week that starts Monday while others have ones that start on Sunday, for example.

The break rules noted above with respect to element 414 of FIG. 4 define the breaks that need to, or are desired to, occur during differing length shifts. For example, regulations or company policy may dictate that shifts must have a 15 minute "Break" Event Type for every 4 hours in duration and must have one 45 minute unpaid "Lunch" Event Type if they are greater than 5 hours in duration. Some breaks might start with a range of offsets from the start of the shift while others might have a range of valid offsets from the end of the shift.

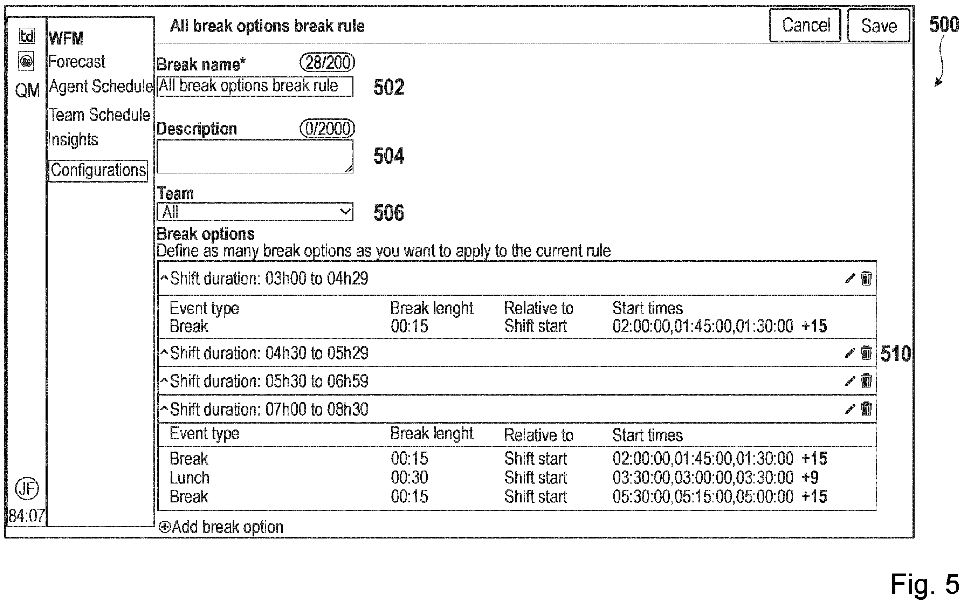

FIG. 5 illustrates UI 500 for defining break rules. At 502, a rule to be defined can be named and a description can be entered at 504. One or more groups of workers, such as teams, to which the break rule is to be applied can be specified at 506. One or more sets of break options, such as break length, start timing, and relative/reference time points can be defined at 510.

Once break rules, or other rules, have been defined and assigned to an agent for a given week, as described above, the user (an administrator for example) can choose to specify that the agent works a rotation instead of having the same rules every week. To indicate an employee is working a rotation, the user can, for example, click on the "Add week" button, at 422 of FIG. 4, on the worker parameter UI 400. This adds a second tab "Week 2" with the configuration for the rotation copied from the last rotation week. Subsequent selection of the button will add Week 3, Week 4, and so on. For example, when adding Week n+1, configuration data from Week n is added. The configuration for Week n+1 can then be changed to reflect any differences among the weeks of the rotation. Because the rotations include multiple scheduling rules, not just the shift assignments, the pattern of differences does not need to be based on changes in the shifts. For example, a rotation could alternate among different numbers of hours worked within the same selection of shifts.

Additionally, once one week is added, a dropdown list is added to select which week of the rotations should be active on the current week. And, any week's configuration can be viewed and updated by clicking on the tab. The user can also choose to remove the week on the currently selected tab. If a week is removed, then subsequent weeks (if any) are renumbered such that weeks are numbered contiguously without gaps. The user can click Change Week Order to move the week forward or backward to another place in the cycle. All weeks will be renumbered when this is done. Of course, various methods can be applied to streamline data entry. For example, worker parameters can be copied from one worker to one or more other workers via a copy button. Additionally, a default set of work parameters can be set up for a team to allow new workers to be added with sensible defaults.

When the scheduling engine 230 runs to place shifts and breaks for agents, the rotation shift module 232 of the scheduling engine 230 will be passed all of the worker parameters, the rotation templates, and the break rules along with an alignment date indicating when the rotation cycle starts so the scheduling engine can determine appropriate work rules to apply to each week in the scheduling period.

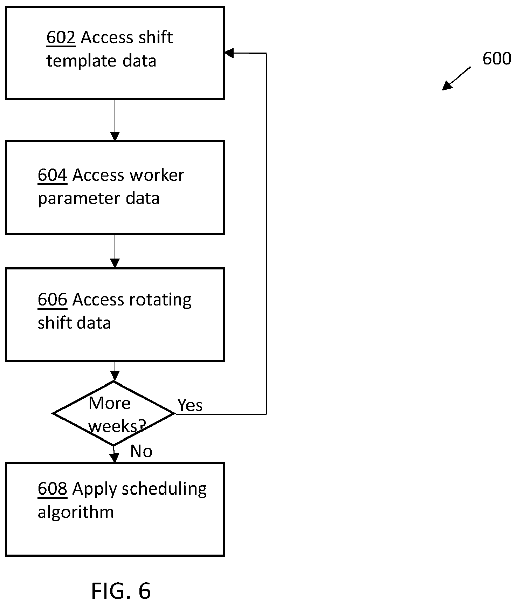

FIG. 6 illustrates a method 600 accomplished by scheduling engine 230 in accordance with disclosed implementations. At step 602, a shift template data structure for an agent for a single week is accessed, the shift template data structure can have various data fields as described above, including an agent work time data field for a plurality of days in a week, an agent weekly minimum hour data field, and an agent weekly maximum hour data field. At step 604, a worker parameter data structure for a specified worker is accessed. At 606, a shift data structure for the agent is created based on the shift template and the worker parameters. Steps 602, 604, and 606 can be repeated for a plurality of weeks or other time periods. When there are no more weeks to be scheduled, a scheduling algorithm is applied in accordance with the shift rotation data, at 608, to assign the agent to a schedule of rotating shifts.

The elements of the disclosed implementations can include computing devices including hardware processors and memories storing executable instructions to cause the processor to carry out the disclosed functionality. Numerous other general purpose or special purpose computing system environments or configurations may be used. Examples of well-known computing systems, environments, and/or configurations that may be suitable for use include, but are not limited to, personal computers, servers, handheld or laptop devices, multiprocessor systems, microprocessor-based systems, network personal computers (PCs), minicomputers, mainframe computers, embedded systems, distributed computing environments that include any of the above systems or devices, and the like. Computer-executable instructions, such as program modules, being executed by a computer may be used. Generally, program modules include routines, programs, objects, components, data structures, etc. that perform particular tasks or implement particular abstract data types. Distributed computing environments may be used where tasks are performed by remote processing devices that are linked through a communications network or other data transmission medium. In a distributed computing environment, program modules and other data may be located in both local and remote computer storage media including memory storage devices.

The computing devices can include a variety of tangible computer readable media. Computer readable media can be any available tangible media that can be accessed by device and includes both volatile and non-volatile media, removable and non-removable media. Tangible, non-transient computer storage media include volatile and non-volatile, and removable and non-removable media implemented in any method or technology for storage of information such as computer readable instructions, data structures, program modules or other data.

The various data and code can be stored in electronic storage devices which may comprise non-transitory storage media that electronically stores information. The electronic storage media of the electronic storage may include one or both of system storage that is provided integrally (i.e., substantially non-removable) with the computing devices and/or removable storage that is removably connectable to the computing devices via, for example, a port (e.g., a USB port, a firewire port, etc.) or a drive (e.g., a disk drive, etc.). The electronic storage may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media.

Processor(s) of the computing devices may be configured to provide information processing capabilities and may include one or more of a digital processor, an analog processor, a digital circuit designed to process information, an analog circuit designed to process information, a state machine, and/or other mechanisms for electronically processing information. As used herein, the term "module" may refer to any component or set of components that perform the functionality attributed to the module. This may include one or more physical processors during execution of processor readable instructions, the processor readable instructions, circuitry, hardware, storage media, or any other components.

The contact center 150 of FIG. 1 can be in a single location or may be cloud-based and distributed over a plurality of locations, i.e. a distributed computing system. The contact center 150 may include servers, databases, and other components. In particular, the contact center 150 may include, but is not limited to, a routing server, a SIP server, an outbound server, a reporting/dashboard server, automated call distribution (ACD), a computer telephony integration server (CTI), an email server, an IM server, a social server, a SMS server, and one or more databases for routing, historical information and campaigns.

Although the present technology has been described in detail for the purpose of illustration based on what is currently considered to be the most practical and preferred implementations, it is to be understood that such detail is solely for that purpose and that the technology is not limited to the disclosed implementations, but, on the contrary, is intended to cover modifications and equivalent arrangements that are within the spirit and scope of the appended claims. For example, it is to be understood that the present technology contemplates that, to the extent possible, one or more features of any implementation can be combined with one or more features of any other implementation.

While implementations and examples have been illustrated and described, it is to be understood that the invention is not limited to the precise construction and components disclosed herein. Various modifications, changes and variations may be made in the arrangement, operation and details of the method and apparatus disclosed herein without departing from the spirit and scope of the invention defined in the appended claims.

## Claims

1. A method for assigning agents for shifts in a call center environment, the method comprising:
providing a shift template data structure for a single week, the shift template data structure having data fields, the data fields including:
an agent work time data field for a plurality of days in a week;
an agent weekly minimum hour data field; and
an agent weekly maximum hour data field;
entering worker parameter data values for each of the data fields for a specified agent to obtain an agent shift data structure;
repeating the providing and entering steps for a plurality of weeks;
receiving shift rotation data; and
processing the agent shift data structures in accordance with the shift rotations data to assign the agent to a schedule of rotating shifts in accordance with a scheduling engine algorithm.

2. The method of claim 1, wherein the shift rotation data specifies the required time duration of breaks and the required frequency of breaks.

3. The method of claim 1, wherein entering data values comprises entering previous data values from a previous iteration of the entering step.

4. The method of claim 3, further comprising editing the previous data values.

5. The method of claim 2, wherein the shift template specifies one or more agents for which each shift applies.

6. The method of claim 1, wherein the worker parameter data specifies minimum and maximum number of days per week that the worker will work and the minimum and maximum number of hours per week that the worker will work.

7. A computer system for assigning agents for shifts in a call center environment, the system comprising:
at least one computer processor; and
at least one memory device having instructions stored thereon which, when executed by the at least one computer processor, cause the at least one computer processor to:
(a) receive a shift template data structure for a single week, the shift template data structure having data fields, the data fields including:
an agent work time data field for a plurality of days in a week;
an agent weekly minimum hour data field; and
an agent weekly maximum hour data field;
(b) receive worker parameter data values for each of the data fields for a specified agent to obtain an agent shift data structure;
repeating (a) and (b) for a plurality of weeks;
receive shift rotation data; and
process the agent shift data structures in accordance with the shift rotations data to assign the agent to a schedule of rotating shifts in accordance with a scheduling engine algorithm.

8. The system of claim 7, wherein the shift rotation data specifies the required time duration of breaks and the required frequency of breaks.

9. The system of claim 7, wherein the data values comprise previous data values from a previous iteration of the entering step.

10. The system of claim 9, wherein the data values are previous data values that have been edited.

11. The system of claim 8, wherein the shift template specifies one or more agents for which each shift applies.

12. The system of claim 7, wherein the worker parameter data specifies minimum and maximum number of days per week that the worker will work and the minimum and maximum number of hours per week that the worker will work.
